# EUROPEAN PATENT SPECIFICATION

(11) **EP 2 367 720 B1**
(45) Date of publication and mention of the grant of the patent: **04.09.2019**
(21) Application number: 09830793.7
(22) Date of filing: 26.10.2009
(51) Int. Cl.: B64D 1/04, B64D 7/04, F16B 5/02, F16B 19/02, F16B 21/16, F16B 21/18

(54) **ECCENTRIC FITTING ASSEMBLY**
EXZENTRISCHES PASSTEIL
ENSEMBLE DE FIXATION EXCENTRIQUE

(30) Priority: 05.12.2008 WO PCT/US2008/008562
(43) Date of publication of application: 28.09.2011
(73) Proprietor: Sikorsky Aircraft Corporation, Stratford, CT 06615-9129 (US)
(72) Inventor: MAXWELL, Robert W., Fairfield Connecticut 06825 (US); CHASEN, Scott A., Orange Connecticut 06477 (US); HAINSWORTH, Barton J., Oxford Connecticut 06478 (US)
(74) Representative: Schmitt-Nilson Schraud Waibel Wohlfrom Patentanwälte Partnerschaft mbB
(86) International application number: PCT/US2009/062027
(87) International publication number: WO 2010/065213

(56) References cited:
- DE-A1- 3 909 968
- DE-A1- 19 854 482
- DE-A1-102004 012 262
- DE-U1-202005 015 678
- KR-A- 937 003 547
- KR-A- 20010 080 561
- KR-B1- 100 830 127
- US-A- 2 942 897
- US-A- 4 322 192
- US-A1- 2003 202 839
- US-A1- 2005 129 554

## Description

### BACKGROUND

The present disclosure is a Continuation-In-Part application which claims priority to PCT International Application No. PCT/US08/85626, filed 5 December 2008.

This invention was made with government support under U.S. Army Contract No. W58RGZ-08-C-0003. The government therefore has certain rights in this invention.

The present disclosure relates to a fitting assembly, and more particularly to a fitting assembly which facilitates installation of equipment through accommodation of airframe build and supplier component structure tolerances.

A variety of equipment may be mounted within an aircraft cabin. Aircrew seats, litters and weapon racks, for example, may be mounted to the cabin floor with a fitting which permits the installation and removal of the equipment to reconfigure the aircraft as required.

Some equipment which is interchangeably mounted within the aircraft cabin may require a structurally tight installation which does not generate a mount preload. Such equipment may not readily accommodate airframe build and equipment tolerances. Assembly may thereby necessitate the mix-and-match of specific equipment to specific aircraft to complete each installation.

DE 10 2004 012262 A1 discloses a mounting plate that has an arrangement having a horizontal surface assigning a thread. The horizontal surface has a recess where the mounting plate covers a thread for screwing into the thread of the arrangement. By screwing the thread into the receiving thread of the arrangement a distance between the horizontal surface and the arrangement is steplessly adjustable.

### SUMMARY

An eccentric fitting assembly according to an exemplary aspect of the present disclosure includes an outer eccentric fitting which defines an outer axis, the outer eccentric fitting defines an opening offset from the outer axis. An inner eccentric fitting defines an inner axis, the inner eccentric fitting defines a stud receiver opening offset from the inner axis, the inner eccentric fitting receivable within the opening, the outer eccentric fitting defining a threaded section which defines the outer axis.

A method of mounting equipment to a stud according to an exemplary aspect of the present disclosure includes attaching an outer eccentric fitting to the equipment, the outer eccentric fitting comprising a threaded section which defines an outer axis, the outer eccentric fitting further defines an opening offset from the outer axis. Attaching an inner eccentric fitting such that a stud opening surrounds the stud, the inner eccentric fitting defines an inner axis, the stud opening offset from the inner axis. Receiving the inner eccentric fitting within the opening such that the inner eccentric fitting engages the stud and the inner eccentric fitting rotates within the opening to compensate for an offset between the equipment and the stud.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic view of a rotary-wing aircraft embodiment for use with the present disclosure;
Figure 2A is a perspective view within a cabin of a rotary- wing aircraft with a munition launcher supported upon a stand removably mounted to a cabin floor;
Figure 2B is a perspective view of a stud within the cabin floor;
Figure 3 is an exploded view of the eccentric fitting assembly;
Figure 4A is a schematic section view of the eccentric fitting assembly in a first position;
Figure 4B is a schematic line view of the eccentric fitting assembly in a second position;
Figure 5 is a schematic sectional line view of a spring pin system of the eccentric fitting assembly;
Figure 6A is an exploded view of another non-limiting embodiment of an eccentric fitting assembly;
Figure 6B is a perspective partial sectional view of the eccentric fitting assembly of Figure 6A in an unlocked condition:
Figure 6C is a perspective partial sectional view of the eccentric fitting assembly of Figure 6A in a locked condition;
Figure 6D is a sectional view of the eccentric fitting assembly of Figure 6A;
Figure 6E is a sectional view of the eccentric fitting assembly of Figure 6A in an unlocked condition; and
Figure 6F is a sectional view of the eccentric fitting assembly of Figure 6A in a locked condition.

### DETAILED DESCRIPTION

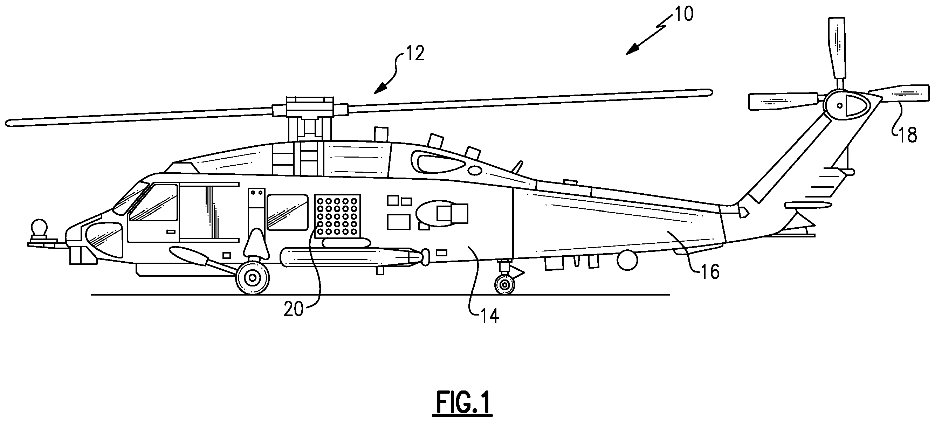

Figure 1 schematically illustrates a rotary-wing aircraft 10 having a main rotor system 12. The aircraft 10 includes an airframe 14 having an extending tail 16 which mounts an anti-torque system 18. Although a particular helicopter configuration is described in the disclosed embodiment, other configurations and/or machines, such as high speed compound rotary-wing aircraft with supplemental translational thrust systems, dual contra-rotating, coaxial rotor system aircraft, turbo-props, tilt-rotors, tilt-wing and straight wing aircraft, will also benefit herefrom. The aircraft 10 may carry munitions 20 such as sonobuoys.

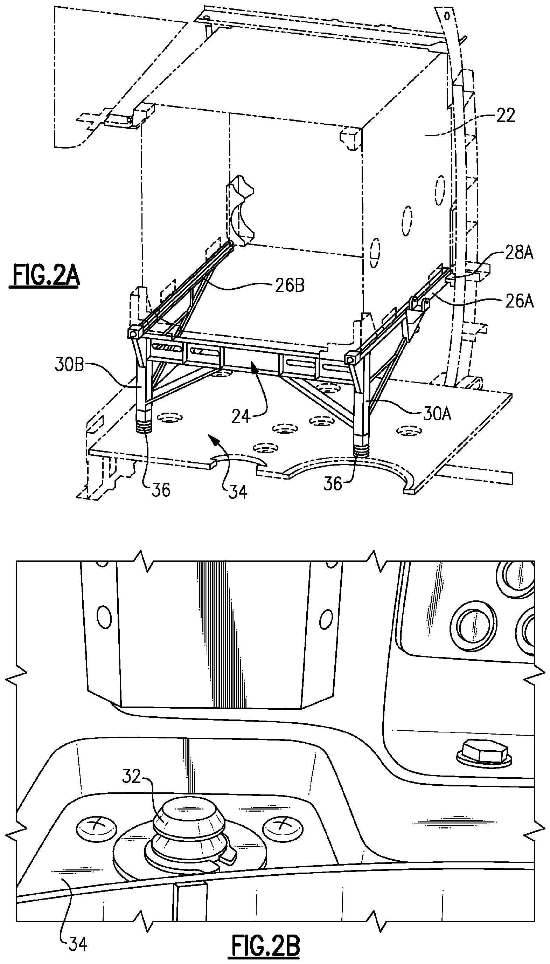

Referring to Figure 2A, the munitons 20 may be contained within a launcher 22 supported upon a stand 24. The stand 24 may be removably mounted within the aircraft cabin. The stand 24 includes two pivot arms 26A, 26B which interface with two lower window mount fittings 28A, 28B and two stand support legs 30A, 30B. Each of the stand interfaces are close tolerance fits for structural considerations and may not allow for normal tolerance variations in the airframe and stand even with the telescopic adjustment in the height of the stand support legs 30A, 30B.

An eccentric fitting assembly 36 mountable to each of the legs 30A, 30B facilitate interface with a respective floor stud 32 in the cabin floor 34 (Figure 2B). The eccentric fitting assembly 36 may be threaded into the legs 30A, 30B without interference with the telescopic adjustment. The eccentric fitting assembly 36 readily retrofits with other standard threaded/stud mount arrangements. It should be understood that although a sonobuoy stand is illustrated in the disclosed non-limiting embodiment, other equipment such as racks, crew seats and litters employed in military or commercial aircraft will also benefit from usage of the eccentric fitting assembly 36 disclosed herein.

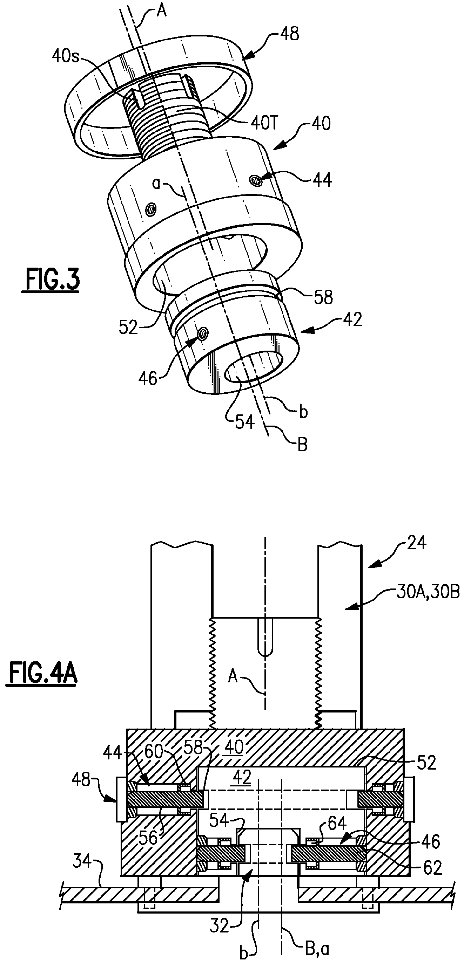

Referring to Figure 3, the eccentric fitting assembly 36 generally includes an outer eccentric fitting 40, an inner eccentric fitting 42, an outer spring pin system 44, an inner spring pin system 46 and a lock ring 48. Relative rotation of the outer eccentric fitting 40 and the inner eccentric fitting 42 results in adjustment of the centerline of the eccentric fitting assembly 36. The outer eccentric fitting 40 is generally cylindrical in the illustrated non-limiting embodiment, but may alternatively be of a polygonal configuration to facilitate installation and adjustment by hand or with a tool.

A threaded section 40T of the outer eccentric fitting 40 facilitates installation of the eccentric fitting assembly 36 to the respective stand support legs 30A, 30B or other equipment to provide vertical adjustment thereof. It should be understood that attachments other than the threaded section 40T may additionally be provided. The threaded section 40T may additionally include slots 40S which, when aligned to aperture in the stand support legs 30A, 30B facilitates lock-wire attachment to prevent rotation out of adjustment.

The outer eccentric fitting 40 includes an opening 52 which is sized to receive the inner eccentric fitting 42. The opening 52 is defined along an axis A which is offset from a longitudinal axis A defined by the threaded section 40T of the outer eccentric fitting 40. The inner eccentric fitting 42 includes a stud opening 54 which is defined along an axis B which is also offset from a longitudinal axis B defined by the inner eccentric fitting 42.

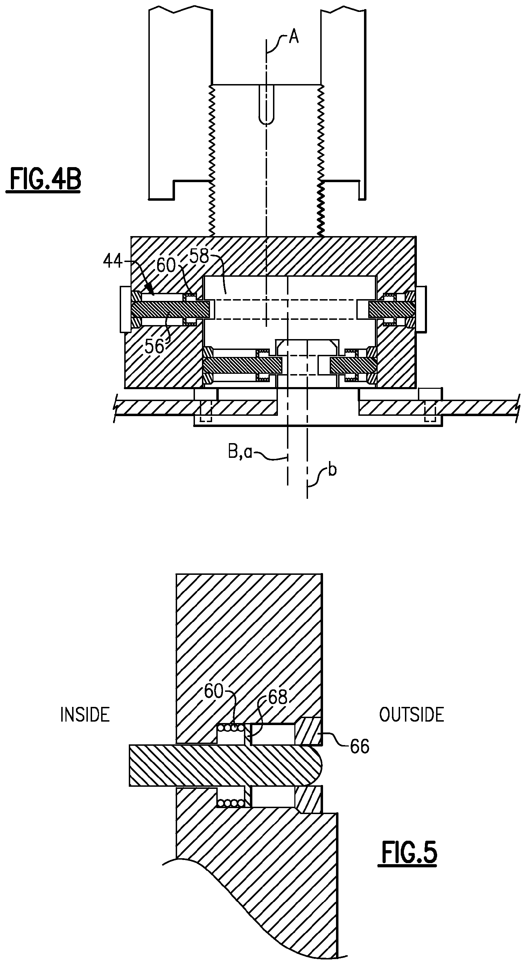

The offset of opening 52 and stud opening 54 is equivalent such that relative rotation of the outer eccentric fitting 40 and the inner eccentric fitting 42 positions the centerline b of the stud opening 54 from along axis A, which is the true center of the eccentric fitting assembly 36 as defined by the threaded section 40T (Figure 4A), to a maximum radial offset when the outer eccentric fitting 40 and the inner eccentric fitting 42 define a relative rotational position of 180 degrees (Figure 4B) such that the centerline b of the stud opening 54 is offset from axis A. Through the relative rotation of the outer eccentric fitting 40 and the inner eccentric fitting 42, an axis b of the stud opening 54 may be located anywhere within a diameter defined by the relative rotation.

Referring to Figure 4A, the outer spring pin system 44 is located within the outer eccentric fitting 40 transverse to axis A such that a multiple of lock pins 56 are receivable within a slot 58 defined about the outer perimeter of the inner eccentric fitting 42. Each of the lock pins 56 are biased outward relative axis A by a spring 60 and retained within the outer eccentric fitting 40 by a retainer 66 (Figure 5). The spring 60 reacts against a flange 68 formed by the lock pin 56. Alternatively, the flange 68 may be formed by a clip ring or the like attached to the lock pin 56.

The inner spring pin system 46 is located within the stud opening 54 transverse to axis B such that a multiple of stud lock pins 62 are engageable with the floor stud 32. Each of the stud lock pins 62 are biased outward relative axis B by a spring 64 and are mounted within the inner eccentric fitting 42 as discussed with regard to the outer spring pin system 44.

The eccentric fitting assembly 36 facilitates installation of the stand 24 or other equipment onto the cabin floor 34 or other surface with studs 32. The threaded section 40T of the outer eccentric fitting 40 is threaded into the respective stand support legs 30A, 30B or other equipment. The inner eccentric fitting 42 is located over the floor stud 32. The outer eccentric fitting 40 is then located over the inner eccentric fitting 42 such that the inner eccentric fitting 42 is received within the opening 52. Insertion of the inner eccentric fitting 42 within the opening 52 drives the stud lock pins 62 into the stud opening 54 to lock the multiple of stud lock pins 62 onto the floor stud 32, The lock ring 48 is then mounted onto the outer eccentric fitting 40 to drive the multiple of lock pins 56 into the slot 58 to lock the inner eccentric fitting 42 within the outer eccentric fitting 40 to thereby lock the eccentric fitting assembly 36 together and attach the stand 24 to the cabin floor 34. The lock ring 48 may be engaged with the outer eccentric fitting 40 through a threaded or sliding engagement.

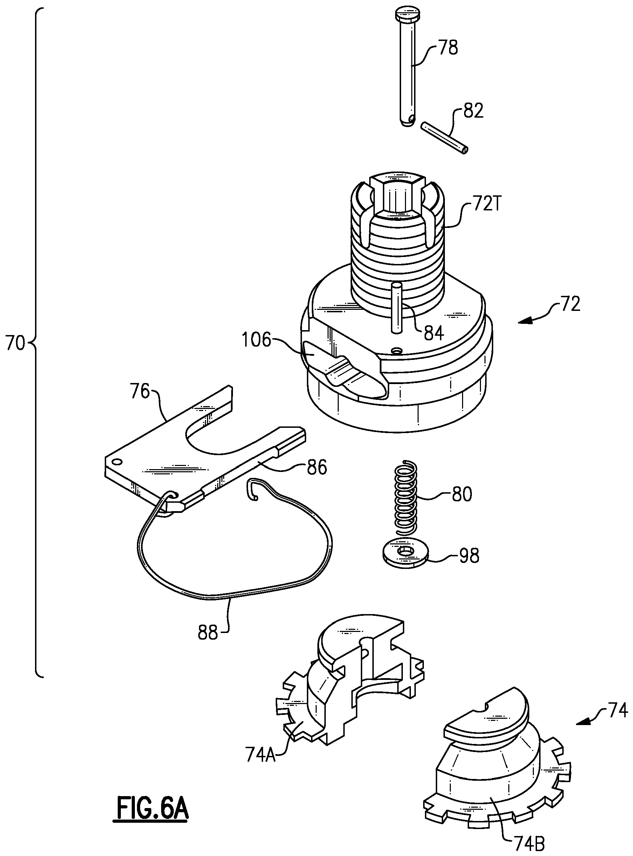

Referring to Figure 6A, another embodiment of an eccentric fitting assembly 70 generally includes an outer eccentric fitting 72, an inner eccentric fitting 74, and a lock fork plate 76. Relative rotation of the outer eccentric fitting 72 and the inner eccentric fitting 74 results in adjustment generally as discussed above.

A threaded section 72T of the outer eccentric fitting 72 facilitates installation of the eccentric fitting assembly 36 to the respective stand support legs 30A, 30B or other equipment to provide vertical adjustment thereof. The threaded section 72T defines an axis A about which the outer eccentric fitting 72 is rotated to provide vertical adjustment between the eccentric fitting assembly 36 and the respective stand support legs 30A, 30B (Figure 2A)

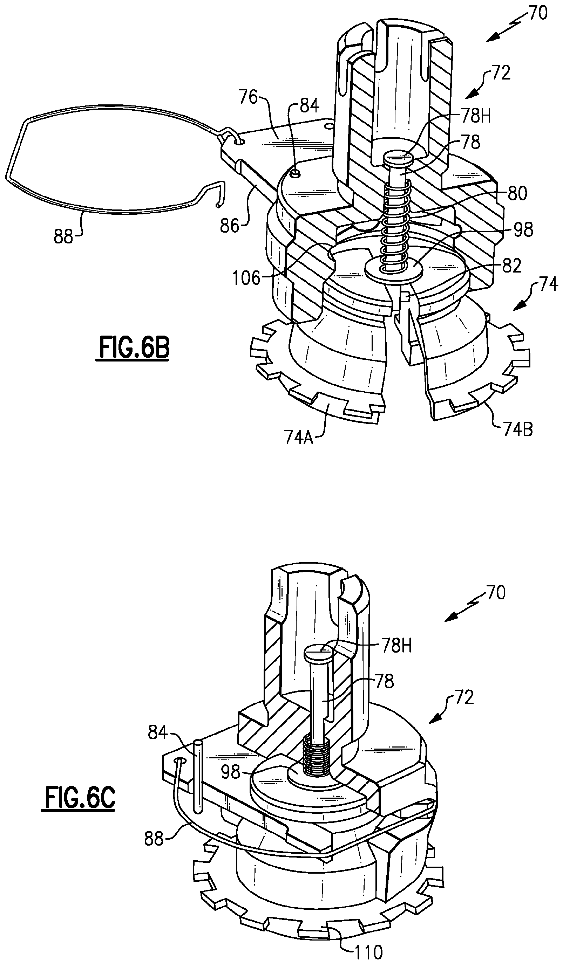

The eccentric fitting assembly 70 further includes a rod 78 which is biased by a spring 80. The rod 78 is retained to a first inner eccentric fitting portion 74A and a second inner eccentric fitting portion 74B with a roll pin 82 (Figure 6B). A roll pin 84 interfaces with a slot 86 within the lock fork plate 76 to limit travel of the lock fork plate 76 and prevent detachment thereof from the eccentric fitting assembly 70 (Figure 6B). A spring wire retainer 88 is attached to the lock fork plate 76 to retain the lock fork plate to the eccentric fitting assembly 70 in a locked position (Figure 6C).

The outer eccentric fitting 72 mounts the roll pin 84 to interface with the slot 86. The roll pin 84 interfaces with the slot 86 within the lock fork plate 76 to constrain sliding movement of the lock fork plate 76 as an assembly to the outer eccentric fitting 72 but permits sliding movement to provide engagement or release of the first inner eccentric fitting portion 74A and the second inner eccentric fitting portion 74B.

The first inner eccentric fitting portion 74A and the second inner eccentric fitting portion 74B may include an interface 110 such as a multiple tooth outer perimeter which extend below and outside the outer eccentric fitting 72 to provide a wheel for an installer to rotate the inner eccentric fitting 74 relative to the outer eccentric fitting 72. This facilitates alignment and installation of the eccentric fitting assembly 70 to the floor stud 32.

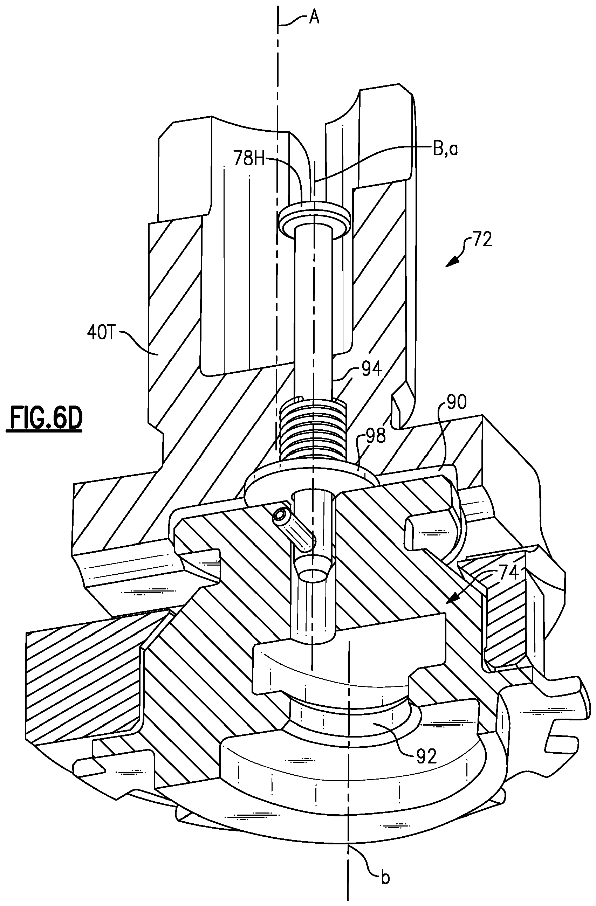

Referring to Figure 6D, the outer eccentric fitting 72 is defined along an axis A defined by the threaded section 40T. The outer eccentric fitting 72 includes an opening 90 defined along an axis A. Opening 90 is sized to receive the inner eccentric fitting 74 along an axis of rotation B. The opening 90 is offset from the longitudinal axis A defined by the threaded section 40T of the outer eccentric fitting 72.

The inner eccentric fitting 74 includes a stud opening 92 defined along an axis B which is also offset within the inner eccentric fitting 74 and relative to the axis of rotation B. The offset of opening 90 and stud opening 92 may be equivalent such that relative rotation of the outer eccentric fitting 72 and the inner eccentric fitting 74 may position the stud opening 92 from along axis A, which is the true center of the eccentric fitting assembly 36 with regard to the threaded section 72T, to a maximum radial offset when the outer eccentric fitting 72 and the inner eccentric fitting 74 define a relative rotational position of 180 degrees. Through the relative rotation of the outer eccentric fitting 72 and the inner eccentric fitting 74, the stud opening 92 may be located anywhere within a diameter defined by the relative rotation.

A rod opening 94 is defined along the axis of rotation B to receive rod 78. The roll pin 82 is transverse to the axis B for receipt within clearance apertures 96 in each of the first inner eccentric fitting portion 74A and the second inner eccentric fitting portion 74B. A head 78H of the rod 78 limits maximum extension of the rod 78 in response to the bias of the spring 80 (Figure 6B).

A washer 98 further supports the first inner eccentric fitting portion 74A and the second inner eccentric fitting portion 74B when in an unlocked position (Figure 6B) and facilitates relative rotation between the outer eccentric fitting 72 and the inner eccentric fitting 74 when in a locked position (Figure 6C). Maximum extension of the rod 78 assures that the first inner eccentric fitting portion 74A and the second inner eccentric fitting portion 74B may separate to receive the floor stud 32 but not disengage from the outer eccentric fitting 72 to assure a single assembly.

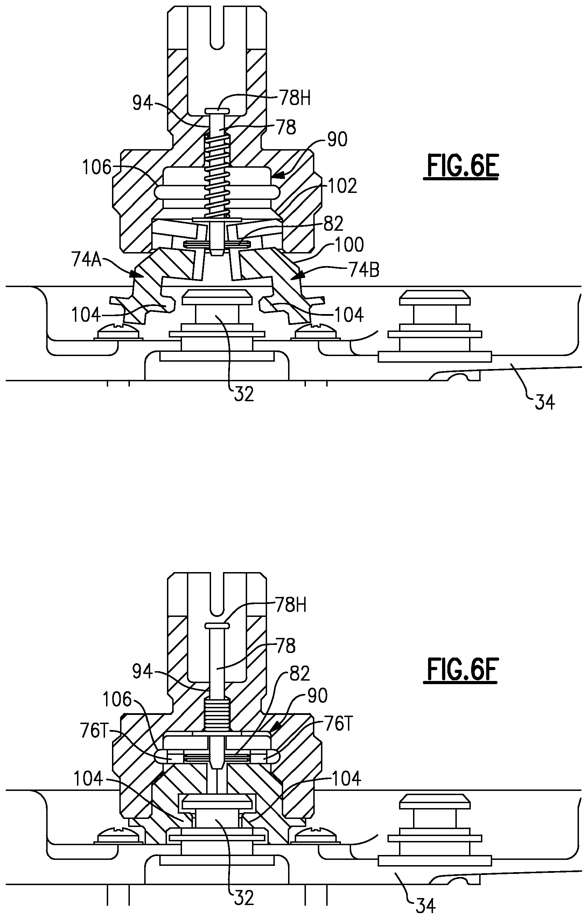

Referring to Figure 6E, the first inner eccentric fitting portion 74A and the second inner eccentric fitting portion 74B include a frustro-conical shape 100 along an outside surface thereof with a corresponding frustro-conical surface 102 within the opening 90 to facilitate closure of the first inner eccentric fitting portion 74A and the second inner eccentric fitting portion 74B when the outer eccentric fitting 72 is translated downward toward the floor stud 32 (Figure 6F),

The first inner eccentric fitting portion 74A and the second inner eccentric fitting portion 74B thereby close around the floor stud 32 to capture the floor stud within tangs 104 defined within the stud opening 92 (Figure 6F).

As the first inner eccentric fitting portion 74A and the second inner eccentric fitting portion 74B are retracted within the opening 90, the rod 78 retracts through the rod opening 94 and thereby compresses the spring 80. When the first inner eccentric fitting portion 74A and the second inner eccentric fitting portion 74B are fully retracted within the opening 90, the floor stud 32 is captured therein.

A slot 106 is defined through the outer eccentric fitting 72 approximately midway along, and transverse to axis B, to receive the lock fork plate 76. The first inner eccentric fitting portion 74A and the second inner eccentric fitting portion 74B define a mating groove 108A, 108B within an outer periphery thereof to receive the tines 76T of the lock plate fork 76 when fully inserted into the slot 106. The lock plate fork 76 thereby locks the first inner eccentric fitting portion 74A and the second inner eccentric fitting portion 74B within the opening 90 to react the bias of spring 80 and thus lock the eccentric fitting assembly 70 to the floor stud 32. The lock plate fork 76 reacts vertical loads imposed on the eccentric fitting assembly 70 and prevents separation of the eccentric fitting assembly 70 from the cabin floor 34.

Once the lock fork plate 76 is fully positioned within the slot 106, the spring wire retainer 88 attached to the lock fork plate 76 may be engaged with the outer eccentric fitting 72 to secure the lock fork plate 76 in the locked position (Figure 6C). The spring wire retainer 88 assures prevention of an unintended disengagement due to vibration.

The eccentric fitting assembly facilitates installation of equipment through accommodation of airframe build and supplier component structure tolerances yet reacts any upward or downward loads. Preservation of standard threaded stand and floor stud interfaces allow the eccentric fitting assembly 36 to be is directly retrofitable to legacy aircraft.

It should be understood that relative positional terms such as "forward," "aft," "upper," "lower," "above," "below," and the like are with reference to the normal operational attitude of the vehicle and should not be considered otherwise limiting.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present invention.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the invention may be practiced other than as specifically described. For that reason the appended claims should be studied to determine true scope and content.

## Claims

1. An eccentric fitting assembly (36; 70) comprising:
an outer eccentric fitting (40; 72) which defines an outer axis, said outer eccentric fitting (40; 72) defines an opening offset (52; 90) from said outer axis; and an inner eccentric fitting (42; 74) which defines an inner axis, said inner eccentric fitting (42; 74) defines
a stud opening offset (54; 92) from said inner axis, said inner eccentric fitting (42; 74) receivable within said opening (52; 90), **characterized in that** said outer eccentric fitting (40; 72) defines a threaded section (40T; 72T) which defines said outer axis.

2. The assembly (36) as recited in claim 1, further comprising an outer spring pin system (44) within said outer eccentric fitting (40), said outer spring pin system (44) includes a multiple of lock pins (56) transverse to said outer axis such that said multiple of lock pins (56) are receivable within a slot (58) about an outer periphery of said inner eccentric fitting (42) to retain said inner eccentric fitting (42) within said opening (52), said multiple of lock pins (56) are biased outward relative said opening (52).

3. The assembly (36) as recited in claim 2, further comprising a lock ring (48) engageable with said outer eccentric fitting (40) which retains said multiple of lock pins (56) within said slot (58).

4. The assembly (36) as recited in claim 2 or 3, further comprising an inner spring pin system (46) within said inner eccentric fitting (42), said inner spring pin system (46) includes a multiple of stud pins (62) transverse to said inner axis, said multiple of stud pins (62) are biased outward relative said stud opening (54).

5. The assembly (36) as recited in claim 4, wherein said multiple of stud pins (62) are driven inward to extend at least partially into said stud opening (54) in response to said inner eccentric fitting (42) being received within said opening (54).

6. The assembly (70) as recited in any of claims 1 to 5, wherein said inner eccentric fitting (74) includes a first inner eccentric fitting portion (74A) and a second inner eccentric fitting portion (74B).

7. The assembly (70) as recited in claim 6, wherein said first inner eccentric fitting portion (74A) and said second inner eccentric fitting portion (74B) are spring biased outward relative said opening (90).

8. The assembly (70) as recited in claim 6 or 7, further comprising a lock fork plate (76) transverse to said outer axis, said lock fork plate(76) operable to lock said first inner eccentric fitting portion (74A) to said second inner eccentric fitting portion (74B) within said opening (90).

9. The assembly (70) as recited in any of claims 6 to 8, further comprising a rod (78) that is spring biased for axial movement along said outer axis, a pin (82) mounted transverse to said rod (7 8) for receipt within clearance apertures in each of the said first inner eccentric fitting portion (74A) and said second inner eccentric fitting portion (74B).

10. A method of mounting equipment to a stud (32) comprising:
attaching an outer eccentric fitting (40; 72) to the equipment, the outer eccentric fitting (40; 72) comprising a threaded section (40T; 72T) which defines an outer axis, the outer eccentric fitting (40; 72) further defines an opening offset (52; 90) from the outer axis; attaching an inner eccentric fitting (42; 74) such that a stud (54; 92) opening surrounds the stud (32), the inner eccentric fitting (42; 74) defines an inner axis, the stud opening (54; 92) offset from the inner axis; and receiving the inner eccentric fitting (42; 74) within the opening (52; 90) such that the inner eccentric fitting (42; 74) engages the stud (32) and the inner eccentric fitting (42; 74) rotates within the opening to compensate for an offset between the equipment and the stud (32).

11. A method as recited in claim 10, further comprising:
driving a multiple of stud pins (62) inward to extend at least partially into the stud opening (54) to engage the stud (32) in response to the inner eccentric fitting (42) being received within the opening (52); locating a lock ring (48) about the outer eccentric fitting (40); and driving a multiple of lock pins (56) inward with the lock ring (48) to drive multiple of lock pins (56) at least partially into a slot (58) about an outer periphery of the inner eccentric fitting (42) to retain the inner eccentric fitting (42) within the opening (52).

12. A method as recited in claim 10 or 11, further comprising:
closing a first inner eccentric fitting portion (74A) and a second inner eccentric fitting portion (74B) of the inner eccentric fitting (74) in response to the first inner eccentric fitting portion (74A) and the second inner eccentric fitting portion (74B) being received within the opening (90) to capture the stud (32) therein.

13. A method as recited in claim 12, further comprising: locking the first inner eccentric fitting portion (74A) and the second inner eccentric fitting portion (74B) within the opening (90) with a sliding lock fork plate (76).

14. A method as recited in claim 12 or 13, further comprising:
compressing a spring (80) mounted about a rod (78) engaged with the first inner eccentric fitting portion (74A) and the second inner eccentric fitting portion (74B) in response to the first inner eccentric fitting portion (74A) and the second inner eccentric fitting portion (74B) being received within the opening (90) to capture the stud (32) therein.

## Patentansprüche

1. Exzentrische Passteilanordnung (36, 70), die Folgendes umfasst:
ein äußeres exzentrisches Passteil (40; 72), das eine äußere Achse definiert, wobei das äußere exzentrische Passteil (40; 72) einen Öffnungsversatz (52; 90) von der äußeren Achse definiert;
und ein inneres exzentrisches Passteil (42; 74), das eine innere Achse definiert, wobei das innere exzentrische Passteil (42; 74) einen Bolzenöffnungsversatz (54; 92) von der inneren Achse definiert, wobei das innere exzentrische Passteil (42; 74) innerhalb der Öffnung (52; 90) aufnehmbar ist, **dadurch gekennzeichnet, dass** das äußere exzentrische Passteil (40; 72) einen Abschnitt mit Gewinde (40T; 72T) definiert, der die äußere Achse definiert.

2. Anordnung (36) nach Anspruch 1, die ferner ein äußeres Federstiftsystem (44) innerhalb des äußeren exzentrischen Passteils (40) umfasst, wobei das äußere Federstiftsystem (44) eine Vielzahl von Verriegelungsstiften (56) beinhaltet, die quer zu der äußeren Achse sind, sodass mehrere der Verriegelungsstifte (56) innerhalb eines Schlitzes (58) um einen äußeren Umfang des inneren exzentrischen Passteils (42) aufnehmbar sind, um das innere exzentrische Passteil (42) innerhalb der Öffnung (52) zurückzuhalten, wobei die Vielzahl von Verriegelungsstiften (56) nach außen relativ zu der Öffnung (52) vorgespannt sind.

3. Anordnung (36) nach Anspruch 2, die ferner einen Verriegelungsring (48) umfasst, der mit einem äußeren exzentrischen Passteil (40) eingreifbar ist, das die Vielzahl von Verriegelungsstiften (56) innerhalb des Schlitzes (58) zurückhält.

4. Anordnung (36) nach Anspruch 2 oder 3, die ferner ein inneres Federstiftsystem (46) innerhalb des inneren exzentrischen Passteils (42) umfasst, wobei das innere Federstiftsystem (46) eine Vielzahl von Bolzenstiften (62) beinhaltet, die quer zu der inneren Achse sind, wobei die Vielzahl von Bolzenstiften (62) nach außen relativ zu der Bolzenöffnung (54) vorgespannt sind.

5. Anordnung (36) nach Anspruch 4, wobei die Vielzahl von Bolzenstiften (62) nach innen getrieben sind, um sich mindestens teilweise in die Bolzenöffnung (54) zu erstrecken, als Reaktion darauf, dass das innere exzentrische Passteil (42) innerhalb der Öffnung (54) aufgenommen wird.

6. Anordnung (70) nach einem der Ansprüche 1 bis 5, wobei das innere exzentrische Passteil (74) einen ersten inneren exzentrischen Passteilabschnitt (74A) und einen zweiten inneren exzentrischen Passteilabschnitt (74B) beinhaltet.

7. Anordnung (70) nach Anspruch 6, wobei der erste innere exzentrische Passteilabschnitt (74A) und der zweite innere exzentrische Passteilabschnitt (74B) nach außen relativ zu der Öffnung (90) federvorgespannt sind.

8. Anordnung (70) nach Anspruch 6 oder 7, die ferner eine Verriegelungsgabelplatte (76) umfasst, die quer zu der äußeren Achse ist, wobei die Verriegelungsgabelplatte (76) dazu betriebsfähig ist, den ersten inneren exzentrischen Passteilabschnitt (74A) innerhalb der Öffnung (90) an den zweiten inneren exzentrischen Passteilabschnitt (74B) zu verriegeln.

9. Anordnung (70) nach einem der Ansprüche 6 bis 8, die ferner eine Stange (78), die zur axialen Bewegung entlang der äußeren Achse federvorgespannt ist, und einen Stift (82) umfasst, der quer zu der Stange (78) zur Aufnahme innerhalb Abstandsöffnungen in jedem des ersten inneren exzentrischen Passteilabschnitts (74A) und des zweiten inneren exzentrischen Passteilabschnitts (74B) montiert ist.

10. Verfahren zum Montieren von Ausrüstung an einen Bolzen (32), das Folgendes umfasst:
Befestigen eines äußeren exzentrischen Passteils (40; 72) an der Ausrüstung, wobei das äußere exzentrische Passteil (40; 72) einen Abschnitt mit Gewinde (40T; 72T) umfasst, der eine äußere Achse definiert, wobei das äußere exzentrische Passteil (40; 72) ferner einen Öffnungsversatz (52; 90) von der äußeren Achse definiert; Befestigen eines inneren exzentrischen Passteils (42; 74) derart, dass eine Öffnung eines Bolzen (54; 92) den Bolzen (32) umgibt, wobei das innere exzentrische Passteil (42; 74) eine innere Achse definiert, wobei die Bolzenöffnung (54; 92) von der inneren Achse versetzt ist; und Aufnehmen des inneren exzentrischen Passteils (42; 74) innerhalb der Öffnung (52; 90) derart, dass das innere exzentrische Passteil (42; 74) in den Bolzen (32) eingreift und sich das innere exzentrische Passteil (42; 74) innerhalb der Öffnung dreht, um einen Versatz zwischen der Ausrüstung und dem Bolzen (32) zu kompensieren.

11. Verfahren nach Anspruch 10, das ferner Folgendes umfasst:
Antreiben einer Vielzahl von Bolzenstiften (62) nach innen, um sich mindestens teilweise in die Bolzenöffnung (54) zu erstrecken, um den Bolzen (32) einzugreifen, als Reaktion darauf, dass das innere exzentrische Passteil (42) innerhalb der Öffnung (52) aufgenommen wird; Lokalisieren eines Verriegelungsrings (48) um das äußere exzentrische Passteil (40); und Antreiben einer Vielzahl von Verriegelungsstiften (56) nach innen mit dem Verriegelungsring (48), um mehrere der Verriegelungsstifte (56) mindestens teilweise in einen Schlitz (58) um einen äußeren Umfang des inneren exzentrischen Passteils (42) zu treiben, um das innere exzentrische Passteil (42) innerhalb der Öffnung (52) zurückzuhalten.

12. Verfahren nach Anspruch 10 oder 11, das ferner Folgendes umfasst:
Schließen eines ersten inneren exzentrischen Passteilabschnitts (74A) und eines zweiten inneren exzentrischen Passteilabschnitts (74B) des inneren exzentrischen Passteils (74) als Reaktion darauf, dass der erste innere exzentrische Passteilabschnitt (74A) und der zweite innere exzentrische Passteilabschnitt (74B) innerhalb der Öffnung (90) aufgenommen sind, um den Bolzen (32) darin aufzunehmen.

13. Verfahren nach Anspruch 12, das ferner Folgendes umfasst:
Verriegeln des ersten inneren Passteilabschnitts (74A) und des zweiten inneren exzentrischen Passteilabschnitts (74B) innerhalb der Öffnung (90) mit einer Gleitverriegelungsgabelplatte (76).

14. Verfahren nach Anspruch 12 oder 13, das ferner Folgendes umfasst:
Komprimieren einer Feder (80), die um eine Stange (78) montiert ist, die in den ersten inneren exzentrischen Passteilabschnitt (74A) und den zweiten inneren exzentrischen Passteilabschnitt (74B) eingreift, als Reaktion darauf, dass der erste innere exzentrische Passteilabschnitt (74A) und der zweite innere exzentrische Passteilabschnitt (74B) innerhalb der Öffnung (90) aufgenommen sind, um den Bolzen (32) darin aufzunehmen.

## Revendications

1. Ensemble de fixation excentrique (36 ; 70) comprenant :
une fixation excentrique externe (40 ; 72) qui définit un axe externe, ladite fixation excentrique externe (40 ; 72) définit un décalage d'ouverture (52 ; 90) par rapport audit axe externe ; et une fixation excentrique interne (42 ; 74) qui définit un axe interne, ladite fixation excentrique interne (42 ; 74) définit un décalage d'ouverture de goujon (54 ; 92) par rapport audit axe interne, ladite fixation excentrique interne (42 ; 74) pouvant être reçue à l'intérieur de ladite ouverture (52 ; 90), **caractérisé en ce que** ladite fixation excentrique externe (40 ; 72) définit une section filetée (40T ; 72T) qui définit ledit axe externe.

2. Ensemble (36) selon la revendication 1, comprenant en outre un système de goupille-ressort externe (44) à l'intérieur de ladite fixation excentrique externe (40), ledit système de goupille-ressort externe (44) comporte une multitude de goupilles de verrouillage (56) transversales audit axe externe de sorte que ladite multitude de goupilles de verrouillage (56) peuvent être reçues à l'intérieur d'une fente (58) autour d'une périphérie externe de ladite fixation excentrique interne (42) pour retenir ladite fixation excentrique interne (42) à l'intérieur de ladite ouverture (52), ladite multitude de goupilles de verrouillage (56) sont sollicitées vers l'extérieur par rapport à ladite ouverture (52).

3. Ensemble (36) selon la revendication 2, comprenant en outre une bague de verrouillage (48) pouvant venir en prise avec ladite fixation excentrique externe (40) qui retient ladite multitude de goupilles de verrouillage (56) à l'intérieur de ladite fente (58) .

4. Ensemble (36) selon la revendication 2 ou 3, comprenant en outre un système de goupille-ressort interne (46) à l'intérieur de ladite fixation excentrique interne (42), ledit système de goupille-ressort interne (46) comporte une multitude de goupilles de goujon (62) transversales audit axe interne, ladite multitude de goupilles de goujon (62) sont sollicitées vers l'extérieur par rapport à ladite ouverture de goujon (54).

5. Ensemble (36) selon la revendication 4, dans lequel ladite multitude de goupilles de goujon (62) sont entraînées vers l'intérieur pour s'étendre au moins partiellement dans ladite ouverture de goujon (54) en réponse à la réception de ladite fixation excentrique interne (42) à l'intérieur de ladite ouverture (54).

6. Ensemble (70) selon l'une quelconque des revendications 1 à 5, dans lequel ladite fixation excentrique interne (74) comporte une première partie de fixation excentrique interne (74A) et une seconde partie de fixation excentrique interne (74B) .

7. Ensemble (70) selon la revendication 6, dans lequel ladite première partie de fixation excentrique interne (74A) et ladite seconde partie de fixation excentrique interne (74B) sont sollicitées par ressort vers l'extérieur par rapport à ladite ouverture (90).

8. Ensemble (70) selon la revendication 6 ou 7, comprenant en outre une plaque en fourche de verrouillage (76) transversale audit axe externe, ladite plaque en fourche de verrouillage (76) pouvant être utilisée pour verrouiller ladite première partie de fixation excentrique interne (74A) à ladite seconde partie de fixation excentrique interne (74B) à l'intérieur de ladite ouverture (90).

9. Ensemble (70) selon l'une quelconque des revendications 6 à 8, comprenant en outre une tige (78) sollicitée par ressort pour effectuer un mouvement axial le long dudit axe externe, une goupille (82) montée transversalement à ladite tige (78) pour être reçue à l'intérieur d'ouvertures de dégagement dans chacune de ladite première partie de fixation excentrique interne (74A) et de ladite seconde partie de fixation excentrique interne (74B) .

10. Procédé de montage d'équipement sur un goujon (32) comprenant :
le fait d'attacher une fixation excentrique externe (40 ; 72) à l'équipement, la fixation excentrique externe (40 ; 72) comprenant une section filetée (40T ; 72T) qui définit un axe externe, la fixation excentrique externe (40 ; 72) définit en outre un décalage d'ouverture (52 ; 90) par rapport à l'axe externe ; le fait d'attacher une fixation excentrique interne (42 ; 74) de sorte qu'une ouverture de goujon (54 ; 92) entoure le goujon (32), la fixation excentrique interne (42 ; 74) définit un axe interne, le décalage d'ouverture de goujon (54 ; 92) par rapport à l'axe interne ; et la réception de la fixation excentrique interne (42 ; 74) à l'intérieur de l'ouverture (52 ; 90) de sorte que la fixation excentrique interne (42 ; 74) vient en prise avec le goujon (32) et la fixation excentrique interne (42 ; 74) tourne à l'intérieur de l'ouverture pour compenser un décalage entre l'équipement et le goujon (32).

11. Procédé selon la revendication 10, comprenant en outre :
l'entraînement d'une multitude de goupilles de goujon (62) vers l'intérieur pour qu'ils s'étendent au moins partiellement dans l'ouverture de goujon (54) pour venir en prise avec le goujon (32) en réponse à la réception de la fixation excentrique interne (42) à l'intérieur de l'ouverture (52) ; le placement d'une bague de verrouillage (48) autour de la fixation excentrique externe (40) ; et l'entraînement d'une multitude de goupilles de verrouillage (56) vers l'intérieur avec la bague de verrouillage (48) afin d'entraîner une multitude de goupilles de verrouillage (56) au moins partiellement dans une fente (58) autour d'une périphérie externe de la fixation excentrique interne (42) pour retenir la fixation excentrique interne (42) à l'intérieur de l'ouverture (52).

12. Procédé selon la revendication 10 ou 11, comprenant en outre :
la fermeture d'une première partie de fixation excentrique interne (74A) et d'une seconde partie de fixation excentrique interne (74B) de la fixation excentrique interne (74) en réponse à la réception de la première partie de fixation excentrique interne (74A) et de la seconde partie de fixation excentrique interne (74B) à l'intérieur de l'ouverture (90) pour capturer le goujon (32) dans celle-ci.

13. Procédé selon la revendication 12, comprenant en outre :
le verrouillage de la première partie de fixation excentrique interne (74A) et de la seconde partie de fixation excentrique interne (74B) à l'intérieur de l'ouverture (90) avec une plaque en fourche à verrouillage coulissant (76).

14. Procédé selon la revendication 12 ou 13, comprenant en outre :
la compression d'un ressort (80) monté sur une tige (78) en prise avec la première partie de fixation excentrique interne (74A) et la seconde partie de fixation excentrique interne (74B) en réponse à la réception de la première partie de fixation excentrique interne (74A) et de la seconde partie de fixation excentrique interne (74B) à l'intérieur de l'ouverture (90) pour capturer le goujon (32) dans celle-ci.
